# DEMANDE DE BREVET EUROPEEN

(11) **EP 1 486 402 A1**
(43) Date de publication de la demande: **15.12.2004**
(21) Numéro de dépôt: 04291489.5
(22) Date de dépôt: 14.06.2004
(51) Int. Cl.: B62D 25/16, B62D 27/06

(54) **Pièce en matière plastique pour véhicule automobile et assemblage composé de cette piece et d'une autre pièce**

(30) Priorité: 12.06.2003 FR 0307092
(71) Demandeur: COMPAGNIE PLASTIC OMNIUM, 69007 Lyon (FR)
(72) Inventeur: Cordebar, Francis, 01150 Lagnieu (FR)
(74) Mandataire: de la Bigne, Guillaume Michel Marie

(57) **Abrégé**

L'invention concerne une pièce (20, 50) en matière plastique pour véhicule automobile comportant au moins un organe mobile (24, 54) venu de matière avec la pièce, cet organe présentant une surface de butée (25) destinée à prendre appui contre une autre pièce (18, 48).

Cette pièce comporte une lumière (26, 56) apte à recevoir l'organe mobile et conformée pour orienter l'organe mobile de manière que la surface de butée (25) puisse prendre appui contre l'autre pièce.

L'invention concerne également un ensemble de deux pièces de véhicule automobile, comportant une première pièce (20, 50) telle que décrite précédemment, et une seconde pièce (18, 48) constituant l'autre pièce contre laquelle la première pièce prend appui.

## Description

La présente invention concerne une pièce en matière plastique pour véhicule automobile ainsi qu'un ensemble de deux pièces de véhicule automobile.

On sait qu'il est intéressant pour un constructeur automobile de pouvoir fixer deux pièces de carrosserie entre elles par un système de butée amovible.

' En effet, cela permet d'avoir une direction d'assemblage adaptée à la forme des pièces et indépendante de la butée, qui n'est placée en position de fixation qu'après assemblage des pièces, ce qui est particulièrement avantageux sur les chaînes de montage pour augmenter la vitesse de montage et diminuer l'espace nécessaire.

On sait également que les constructeurs cherchent à limiter le nombre de pièces rapportées sur les véhicules car elles coûtent cher en main d'oeuvre et en matière d'une part, et nécessitent souvent un démontage spécifique en vue du recyclage en fin de vie du véhicule d'autre part.

On connaît déjà dans l'état de la technique, notamment de FR 2820391, des ensembles de deux pièces de carrosserie dont l'assemblage ne nécessite aucune pièce de fixation externe. Dans un tel ensemble, le bord de l'une des pièces comporte des lumières tandis que le bord de l'autre pièce comporte des clavettes destinées à s'enclencher dans les lumières de la première pièce.

Le problème consiste en ce que dans un tel système de fixation, chacune des pièces comporte des moyens de fixation et nécessite par conséquent un moulage particulier. Ainsi, lorsque l'une des pièces à fixer est déjà relativement complexe à démouler, la présence des clavettes peut accroître cette complexité.

Par ailleurs, lorsque les deux pièces sont faites dans un matériau différent, les clavettes et les lumières peuvent subir des dilatations thermiques différentes et ne plus être encastrables ou vieillir de façon différente, ce qui peut être gênant lors de l'utilisation des pièces.

L'invention a pour but de remédier à ces inconvénients en fournissant un ensemble de deux pièces, agencées pour se réunir à l'aide d'un organe amovible pénétrant dans une lumière, dans lequel l'organe et la lumière sont agencés sur la même pièce.

Ainsi, en réunissant des moyens de fixation sur une même pièce, on peut simplifier le moule de la seconde pièce et reporter la complexité des moyens de fixation sur la première pièce uniquement.

D'autre part, dans un tel ensemble, les organes amovibles et les lumières sont fabriqués dans le même matériau et ont le même comportement thermique.

L'invention présente également l'avantage que lorsque les deux pièces sont fabriqués dans un matériau différent et que l'un des deux matériaux est plus facile à mouler, on peut reporter les moyens de fixation sur ce matériau et ainsi éviter de rajouter des difficultés sur le matériau difficilement moulable.

Enfin, un autre avantage de cette invention est qu'elle permet de reporter la complexité des moyens de fixation sur une seule pièce qui peut être par exemple une pièce cachée telle qu'une pièce structurelle.

A cet effet, l'invention a pour objet une pièce en matière plastique pour véhicule automobile comportant au moins un organe mobile venu de matière avec la pièce, cet organe présentant une surface de butée destinée à prendre appui contre une autre pièce, caractérisée en ce que la pièce comporte une lumière apte à recevoir l'organe mobile et conformée pour orienter l'organe mobile de manière que la surface de butée puisse prendre appui contre l'autre pièce.

Une pièce en matière plastique pour véhicule automobile selon l'invention peut en outre comporter l'une ou plusieurs des caractéristiques suivantes :
- l'organe mobile est une clavette ;
- la lumière est agencée sur une surface de la pièce destinée à entrer en contact avec une surface située sur l'autre pièce ;
- la pièce comporte un lien entre la lumière et l'organe mobile ;
- le lien est souple ;
- l'organe mobile et la lumière sont conformés de manière que l'organe mobile en position de fixation puisse être retiré de la lumière lorsqu'il est reçu par celle-ci ;
- l'organe mobile comporte un talon formant une zone d'appui favorisant son introduction dans la lumière ;
- la pièce comporte une butée fixe conformée pour agir de façon complémentaire à l'organe mobile lorsqu'il est reçu par la lumière de manière à immobiliser la pièce sur l'autre pièce ;
- la butée fixe est venue de matière avec la pièce ;
- la pièce est une pièce de structure d'une pièce de carrosserie ; et
- la pièce est un élargisseur d'aile.

L'invention a également pour objet un ensemble de deux pièces de véhicule automobile, comportant une première pièce telle que décrite précédemment et une seconde pièce constituant l'autre pièce contre laquelle la première pièce prend appui.

Un ensemble de deux pièces de véhicule automobile selon l'invention peut en outre comporter l'une ou plusieurs des caractéristiques suivantes :
- la seconde pièce comporte une portée pour appui de l'organe mobile ;
- la seconde pièce comporte une butée fixe conformée pour agir de façon complémentaire à l'organe mobile lorsqu'il est reçu par la lumière de manière à immobiliser la pièce sur la seconde pièce ;
- la seconde pièce est une pièce de carrosserie, notamment une aile ou une peau extérieure de bas volet ;
- la première pièce est une pièce de structure et la seconde pièce une pièce de carrosserie ; et
- la première pièce est un élargisseur d'aile et la seconde pièce une aile.

L'invention sera mieux comprise à la lecture de la description qui va suivre, donnée uniquement à titre d'exemple et faite en se référant aux dessins annexés dans lesquels :
- la figure 1 est une vue en coupe transversale dans un premier plan vertical de la région inférieure d'un ouvrant arrière de véhicule automobile comportant un ensemble de deux pièces selon l'invention ;
- la figure 2 est une vue éclatée en perspective des deux pièces de la figure 1 ;
- la figure 3 est une vue agrandie et en coupe dans un second plan vertical des moyens de fixation des deux pièces de la figure 1 ;
- la figure 4 est une coupe transversale d'un véhicule automobile comportant deux pièces selon un second mode de réalisation de l'invention.

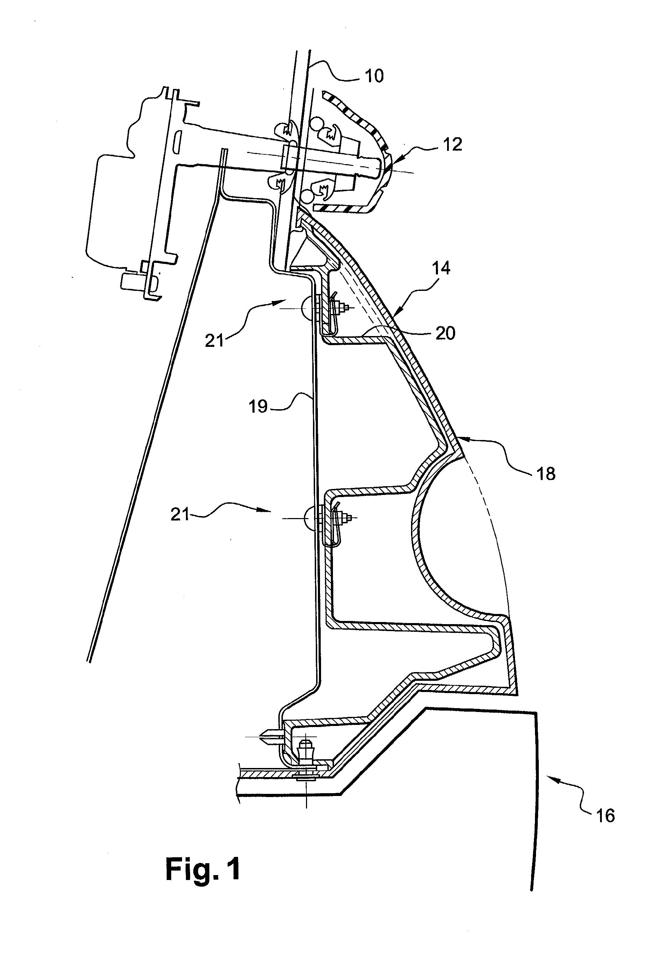

On peut voir sur la figure 1 un ouvrant arrière de véhicule automobile comportant une vitre arrière 10 sur laquelle est fixé un dispositif d'entraînement d'essuie-glace 12, un bas-volet 14 et un pare-chocs 16. Le bas-volet 14 comporte une peau extérieure 18 et une pièce de structure interne 20 destinée à renforcer le bas-volet 14, fixée à la structure métallique 19 de l'ouvrant par des fixations standard 21.

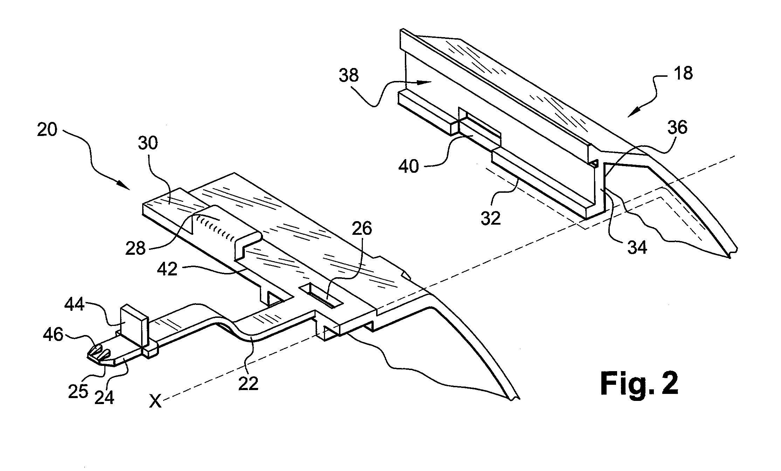

La pièce de structure 20 constitue une pièce en matière plastique selon l'invention et comporte, en différents emplacements répartis sur sa longueur, des moyens pour sa fixation à une autre pièce constituée par la peau 18. Chacun de ces moyens comprend, comme on le voit sur la figure 2, un lien souple 22 à l'extrémité duquel se trouve une clavette 24, constituant un organe mobile selon l'invention, sous forme d'une languette présentant une surface de butée 25. La pièce de structure 20 comporte, en regard du lien souple 22 lorsque ces deux pièces sont réunies, une lumière 26 ainsi qu'une butée fixe 28, la lumière 26 et la butée fixe 28 étant agencées sur une surface 30 destinée à entrer en contact avec une surface 32 située sur la peau extérieure du bas-volet 18. Cette peau extérieure 18 comporte également une paroi sensiblement verticale 34 de surface intérieure 36 et de surface extérieure 38. Dans cette surface 38 est agencée une cavité 40 de forme complémentaire à la forme de la butée fixe 28 de la pièce de structure 20.

Lors de l'assemblage de la pièce de structure 20 avec la peau extérieure du bas-volet 18, les deux pièces sont approchées dans la direction X et la surface 30 de la pièce de structure vient en contact avec la surface 32 de la peau extérieure 18. La butée fixe 28 de la pièce de structure 20 s'encastre alors dans la cavité 40 de la peau extérieure du bas-volet 18 et la paroi 34 de la peau 18 se situe entre une extrémité 42 de la surface 30 de la pièce de structure 20 et la lumière 26 de cette pièce de structure. Il est alors possible d'immobiliser cette peau extérieure du bas-volet en enfilant la clavette 24 dans la lumière 26, cette lumière étant conformée pour orienter la clavette 24 de manière que la surface de butée 25 puisse prendre appui contre la surface intérieure 36 de la peau 18. Pour faciliter cet enfoncement, un talon 44 est agencé en saillie du lien souple 22, pour servir d'appui pour les doigts d'un opérateur.

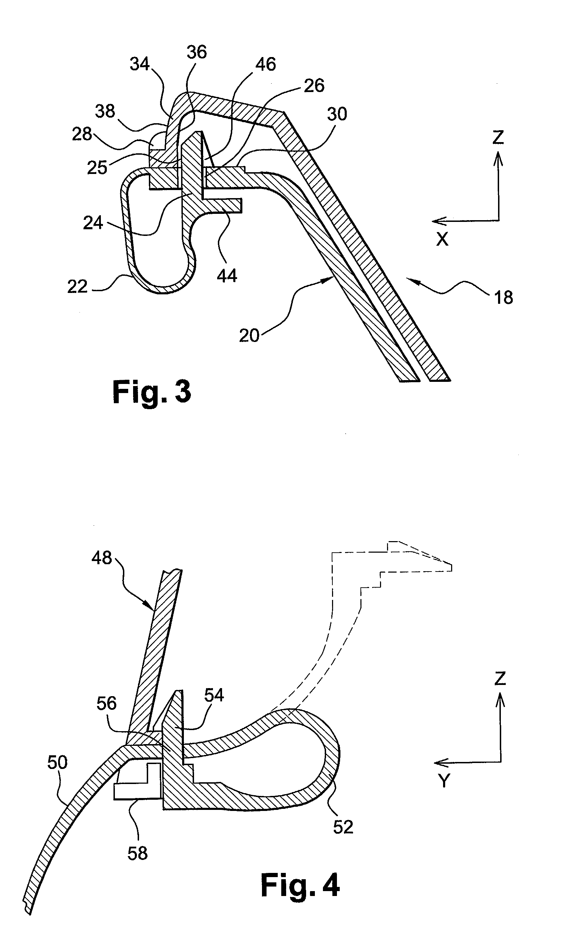

Comme on le voit sur la figure 3, la clavette 24, une fois insérée dans la lumière 26, est maintenue dans la direction Z grâce à des ergots élastiques 46 tels que des clips.

On peut voir sur la figure 4 une aile 48 de véhicule automobile ainsi qu'un élargisseur d'aile 50. L'élargisseur d'aile 50 constitue la pièce et l'aile 48 constitue l'autre pièce au sens de l'invention. L'élargisseur d'aile 50 comporte un lien souple 52 à l'extrémité duquel est agencé un organe mobile 54. Cet organe mobile 54 est destiné à être inséré dans une lumière 56 de l'élargisseur d'aile 50, cette lumière étant conformée pour orienter l'organe mobile 54 de manière que la surface de butée de ce dernier puisse prendre appui contre l'aile 48. L'aile 48 comporte également une butée fixe 58. Lorsque l'on assemble l'élargisseur d'aile 50 sur l'aile 48 en l'approchant dans la direction Y, l'élargisseur d'aile 50 vient en butée contre la butée fixe 58 de l'aile 48 et l'on peut insérer l'organe mobile 54 dans la lumière 56 afin d'immobiliser l'élargisseur d'aile 50 dans le sens des Y.

Il est bien entendu que les modes de réalisation décrits ci-dessus ne présentent aucun caractère limitatif et pourraient recevoir toute modification désirable sans sortir pour cela du cadre de l'invention.

## Revendications

1. Pièce (20, 50) en matière plastique pour véhicule automobile comportant au moins un organe mobile (24, 54) venu de matière avec la pièce, cet organe présentant une surface de butée (25) destinée à prendre appui contre une autre pièce (18, 48), **caractérisée en ce que** la pièce comporte une lumière (26, 56) apte à recevoir l'organe mobile et conformée pour orienter l'organe mobile de manière que la surface de butée (25) puisse prendre appui contre l'autre pièce.

2. Pièce (20, 50) en matière plastique selon la revendication 1, dans laquelle l'organe mobile (24, 54) est une clavette.

3. Pièce (20, 50) en matière plastique selon la revendication 2, dans laquelle la lumière (26) est agencée sur une surface (30) de la pièce (20, 50) destinée à entrer en contact avec une surface (32) située sur l'autre pièce (18, 48).

4. Pièce (20, 50) en matière plastique selon l'une quelconque des revendications 1 à 3, comportant un lien (22, 52) entre la lumière (26, 56) et l'organe mobile (24, 54).

5. Pièce (20, 50) en matière plastique selon la revendication 4, dans laquelle le lien (22, 52) est souple.

6. Pièce (20, 50) en matière plastique selon l'une quelconque des revendications 1 à 5, dans laquelle l'organe mobile (24, 54) et la lumière (26, 56) sont conformés de manière que l'organe mobile (24, 54) puisse être retiré de la lumière (26, 56) lorsqu'il est reçu par celle-ci.

7. Pièce (20) en matière plastique selon l'une quelconque des revendications 1 à 6, dans laquelle l'organe mobile (24) comporte un talon (44) formant une zone d'appui favorisant son introduction dans la lumière (26).

8. Pièce (20, 50) en matière plastique selon l'une quelconque des revendications 1 à 7, dans laquelle la pièce comporte une butée fixe (28, 58) conformée pour agir de façon complémentaire à l'organe mobile (24, 54) lorsqu'il est reçu par la lumière, de manière à immobiliser la pièce (20, 50) sur l'autre pièce (18, 48).

9. Pièce (20, 50) en matière plastique selon la revendication 8, dans laquelle la butée fixe (28, 58) est venue de matière avec la pièce (20, 50).

10. Pièce de structure (20) d'une pièce de carrosserie (18) en tant que pièce en matière plastique selon l'une quelconque des revendications 1 à 9.

11. Elargisseur d'aile (50) en tant que pièce en matière plastique selon l'une quelconque des revendications 1 à 9.

12. Ensemble de deux pièces de véhicule automobile, comportant une première pièce (20, 50) selon l'une quelconque des revendications 1 à 11, et une seconde pièce (18, 48) constituant l'autre pièce (20, 50) contre laquelle la première pièce prend appui.

13. Ensemble de deux pièces de véhicule automobile selon la revendication 12, dans lequel la seconde pièce (18) comporte une portée (32) pour appui de l'organe mobile (24).

14. Ensemble de deux pièces de véhicule automobile selon la revendication 12 ou 13, dans lequel la seconde pièce (48) comporte une butée fixe (58) conformée pour agir de façon complémentaire à l'organe mobile lorsqu'il (54) est reçu par la lumière (26) de manière à immobiliser la première pièce (50) sur la seconde pièce (48).

15. Ensemble de deux pièces de véhicule automobile selon l'une quelconque des revendications 12 à 14, dans lequel la seconde pièce (18, 48) est une pièce de carrosserie, notamment une aile ou une peau extérieure de bas volet.

16. Ensemble de deux pièces de véhicule automobile selon l'une quelconque des revendications 12 à 15, dans lequel la première pièce est une pièce de structure (20) et la seconde pièce une pièce de carrosserie (18).

17. Ensemble de deux pièces de véhicule automobile selon l'une quelconque des revendications 12 à 15, dans lequel la première pièce est un élargisseur d'aile (50) et la seconde pièce une aile (48).
